# EUROPÄISCHE PATENTSCHRIFT

(11) **EP 2 911 899 B1**
(45) Veröffentlichungstag und Bekanntmachung des Hinweises auf die Patenterteilung: **18.04.2018**
(21) Anmeldenummer: 13776728.1
(22) Anmeldetag: 12.10.2013
(51) Int. Cl.: B60H 1/22, B60N 3/04, H05B 3/00, H05B 3/34, H05B 3/56

(54) **HEIZVORRICHTUNG FÜR DEN FAHRZEUGINNENRAUM EINES FAHRZEUGS**
HEATING DEVICE FOR THE VEHICLE INTERIOR OF A MOTOR VEHICLE
DISPOSITIF DE CHAUFFAGE POUR L'HABITABLE D'UN VÉHICULE

(30) Priorität: 24.10.2012 DE 102012020870
(43) Veröffentlichungstag der Anmeldung: 02.09.2015
(73) Patentinhaber: Audi AG, 85045 Ingolstadt (DE)
(72) Erfinder: JUNG, Sebastian, D-85139 Wettstetten (DE); RICHTER, Klaus, D-99425 Weimar (DE); HUSCHKE, Dirk, D-99448 Rittersdorf (DE)
(86) Internationale Anmeldenummer: PCT/EP2013/003075
(87) Internationale Veröffentlichungsnummer: WO 2014/063792

(56) Entgegenhaltungen:
- JP-A- H04 159 124
- JP-A- 2007 001 355
- US-A1- 2009 289 045

## Beschreibung

Die Erfindung betrifft eine Heizvorrichtung für den Fahrzeuginnenraum eines Fahrzeugs gemäß dem Oberbegriff des Patentanspruchs 1 sowie ein Fahrzeug mit einer in dessen Fußraum angeordneten erfindungsgemäßen Heizvorrichtung.

Aus der JP 2007-001 355 A ist eine gattungsbildende Heizvorrichtung mit einer Infrarot-Lichtquelle als Fußheizung bekannt, bei welchem diese Infrarot-Lichtquelle mit einem Reflektor auf dem Fahrzeugboden unterhalb der Sitzfläche eines Fahrzeugsitzes angeordnet wird, so dass der Reflektor die Infrarotstrahlung nur in Richtung der Füße eines Fahrzeuginsassen reflektiert.

Auch die US 2009/289045 A1 beschreibt eine für den Fußraum eines Fahrzeugs vorgesehene Heizvorrichtung mit einer Infrarot-Lichtquelle als Heizquelle, welche ebenso unterhalb einer Sitzfläche eines Fahrzeugsitzes angeordnet ist. Die Heizquelle ist als Heizgewebe, bspw. aus Glasseide mit eingwobenem Karbon hergestellt.

Zudem ist aus der DE 20 2006 007 548 U1 ist eine Heizvorrichtung als Fußheizung zum Einlegen in einen Fahrzeug-Fußraum bekannt. Diese Heizung besteht aus einem Basisteil, einem damit verbundenen elektrisch betreibaren Flächenheizmittel und einem mit dem Flächenheizmittel über eine Steuereinheit verbundenen Anschlusskabel mit einem endseitige Anschlussstecker zum Einstecken in eine Bordsteckdose eines Fahrzeugs. Hierbei kann das Basisteil als flexible Fußmatte oder als keilförmig angestellte Fußstütze ausgebildet sein.
Nachteilig an dieser bekannten Fußheizung für einen Fußraum eines Fahrzeugs liegt darin, dass mit dem hierfür verwendeten Flächenheizmittel vorwiegend nur Kontaktwärme erzeugt wird, die auf eine solche Fußmatte oder Fußstütze aufgestellten Füße eines Fahrzeuginsassen übertragen werden soll. Dies ist jedoch nicht immer ausreichend, um schnell eine ausreichende thermische Behaglichkeit für einen Fahrzeuginsassen zu erreichen.

Schließlich beschreibt die JP H04 - 15 9124 A eine Heizvorrichtung für ein Fahrzeug, die hinter einer im Fußraum des Fahrzeugs angeordneten und gelöcherten Wand montiert ist. Diese Heizvorrichtung umfasst einen Reflektor, so dass die Heizstrahlung durch die gelöcherte Wand in den Fußraum reflektiert wird.
Aufgabe der Erfindung ist es eine daher, eine Heizvorrichtung für den Fahrzeuginnenraum eines Fahrzeugs, insbesondere für den Fußraum eines Fahrzeugs zu schaffen, mit welcher schnell eine hohe thermische Behaglichkeit für einen Fahrzeuginsassen erreicht wird und hierzu dennoch nur ein geringer Leistungsbedarf erforderlich ist.
Diese Aufgabe wird gelöst durch eine Heizvorrichtung mit den Merkmalen des Patentanspruchs 1.
Eine solche als IR-Strahler in einem Reflektorgehäuse angeordnete Heizvorrichtung für den Fahrzeuginnenraum eines Fahrzeugs zeichnet sich erfindungsgemäß dadurch aus, dass der IR-Strahler mit einem in dem Reflektorgehäuse angeordneten textilbasierten Heizband ausgebildet ist und das textilbasierte Heizband aus einem Basalt-Edelstahl-Mischgarn hergestellt ist.

Eine solche erfindungsgemäße Heizvorrichtung stellt ein Hochtemperatur-IR-Strahlersystem dar, welches zu einer bedarfsgerechten Fahrgastkonditionierung durch eine körpernahe Platzierung im Fußraum des Fahrzeugs führt.

Das textilbasierte Heizband ist aus einem Basalt-Edelstahl-Mischgarn hergestellt. Die Verwendung eines solchen Materials führt zu einer geringen thermischen Trägheit der erfindungsgemäßen Heizvorrichtung und ermöglicht dadurch kurze Anlaufzeiten, d. h. die Wärme wird in wenigen Sekunden durch einen Fahrzeuginsassen wahrnehmbar.

Vorzugsweise wird das das Basalt-Edelstahl-Mischgarn aus einem Basaltmultifilament mit einer Feinheit zwischen 50 und 100 tex, vorzugsweise von 68 tex und einer Edelstahlfaser mit einem Durchmesser von 0,02 mm bis 0,05 mm, vorzugsweise von 0,035 mm hergestellt.

In einer weiteren vorteilhaften Ausgestaltung der Erfindung ist das textile Heizband auf einem Heizelementträger angeordnet, welcher von dem Reflektorgehäuse mit parabolischem Querschnitt aufgenommen ist. Da das textilbasierte Heizband eine Temperatur von bis zu 400° C erreichen kann, ist in einer Weiterbildung der Erfindung das Reflektorgehäuse mittels eines Schutzgitters abgedeckt, um hierdurch einen Schutz vor Verbrennungen zu realisieren.

Diese erfindungsgemäße Heizvorrichtung ist vorteilhafter Weise geeignet, in einem Fußraum eines Fahrzeuges angeordnet zu werden.

Die Erfindung wird nachfolgend anhand eines Ausführungsbeispiels unter Bezugnahme auf die beigefügten Figuren ausführlich beschrieben. Es zeigen:
- Figur 1: eine schematische und perspektivische Darstellung des konstruktiven Aufbaus einer Heizvorrichtung gemäß der Erfindung,
- Figur 2: eine Schnittdarstellung der Heizvorrichtung gemäß Schnitt I-I nach Figur 1, und
- Figur 3: eine schematische Teildarstellung eines eine erfindungsgemäße Heizvorrichtung aufnehmenden Fußraums eines Fahrzeuges mit einem Fahrzeuginsassen.

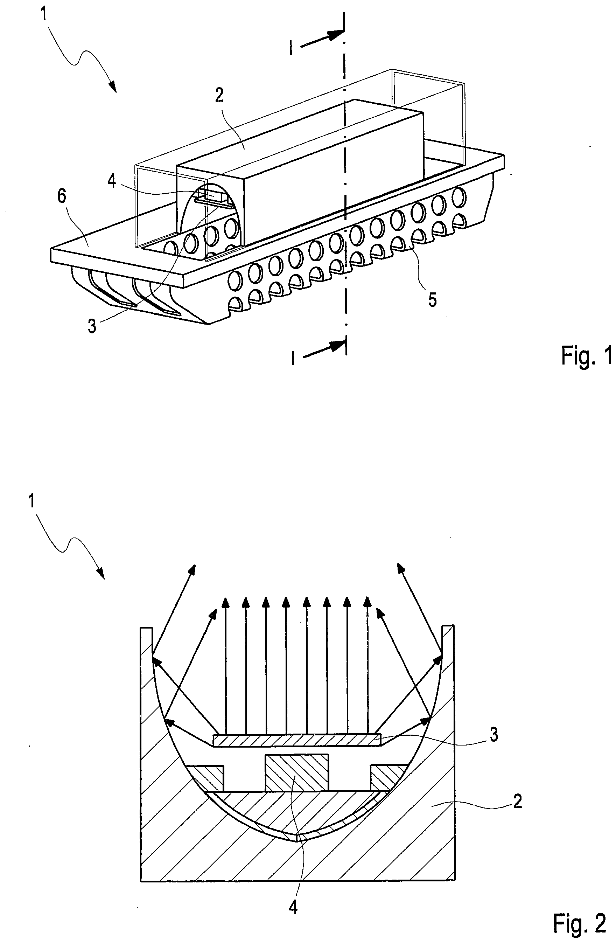

Die Heizvorrichtung 1 gemäß Figur 1 ist ein Hochtemperatur-IR-Strahlersystem für den Fahrzeuginnenraum eines Fahrzeugs und umfasst ein Reflektorgehäuse 2, welches ein auf einem Heizelementträger 4 angeordnetes, die Infrarotstrahlung erzeugendes Heizband 3 aufnimmt. Dieses Reflektorgehäuse 2 als auch ein dessen offene Seite abdeckendes Schutzgitter 5 werden an ein Trägerelement 6 montiert.

Das Reflektorgehäuse 2 weist eine Innenfläche mit einem parabolischen Querschnitt auf, so dass die von dem Heizband 3 erzeugten IR-Strahlen als gerichtete Wärmestrahlung in nahezu senkrechter Richtung zum Heizband 3 das Reflektorgehäuse 2 verlassen, wie dies in Figur 2 dargestellt ist. Mit einer solchen gerichteten IR-Wärmestrahlung ist eine effektive Nutzung der Wärme über große Distanzen möglich.

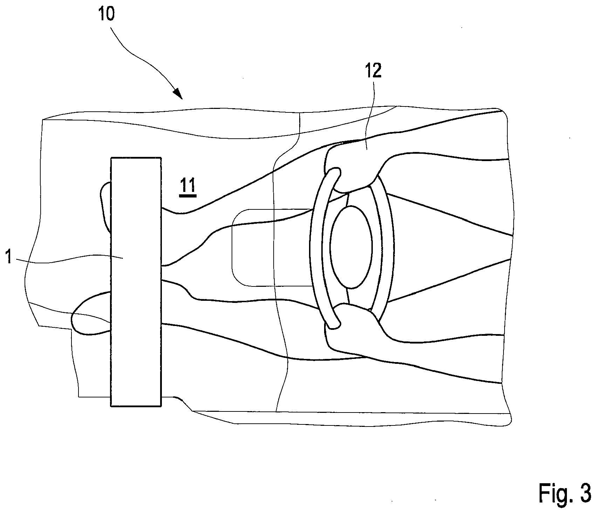

Figur 3 zeigt die Anordnung einer solchen Heizvorrichtung 1 in einem Fahrzeug 10 mit einem Fahrzeuginsassen, hier einem Fahrer 12. Diese Heizvorrichtung 1 ist im Fußraum 11 des Fahrers 12 im oberen Bereich desselben angeordnet.

Das Material des Heizbands 3 besteht aus einem Basaltfaser-Edelstahl-Mischgarn, welches eine gute Temperaturbeständigkeit und einen relativ hohen IR-Emissionsgrad von 0,8 aufweist. Für dieses Basaltfaser-Edelstahl-Mischgarn wird ein elektrisch leitfähiges Basaltmultifilament mit einer Feinheit von 68 tex sowie eine 0,035 mm-Edelstahlfaser verwendet. Hierbei wird die Edelstahlfaser mit den Basaltmultifilamenten mit einer Umwindefrequenz von 40 Umwindungen/m umwunden.

Mit einem solchen Heizband 3 aus Basaltfaser-Edelstahl-Mischgarn weist die Heizvorrichtung 1 eine geringe thermische Trägheit auf, so dass hierdurch eine kurze Anlaufzeit möglich ist und somit die Wärme in wenigen Sekunden für den Fahrer 12 des Fahrzeugs 10 wahrnehmbar ist. Dies bedeutet eine Verkürzung der Kaltstartphase durch ein solches schnelles Ansprechverhalten und eine damit einhergehende Komfortsteigerung für den Fahrer 12.

Der wesentlichste Vorteil einer solchen Heizvorrichtung 1 besteht darin, dass für die Wärme kein Transportmedium, also Luft erforderlich ist, sondern die Fahrzeuginsassen direkt durch die IR-Strahlung einer solchen Heizvorrichtung 1 erwärmt werden. Durch einen solchen gezielten Wärmetransport wird die thermische Behaglichkeit für die Fahrzeuginsassen wesentlich gesteigert, d.h. der Innenraumkomfort erhöht. Weiterhin zeichnet sich die Heizvorrichtung 1 dadurch aus, dass aufgrund der Verwendung des Basaltfaser-Edelstahl-Mischgarns der Leistungsbedarf sehr gering ist und dadurch insbesondere eine Effizienzsteigerung hinsichtlich des Energieverbrauchs des-Fahrzeugs 10 erreicht wird.

Die erfindungsgemäße Heizvorrichtung 1 kann natürlich nicht nur im Fußraum eines Fahrzeugs angeordnet werden, sondern ist auch geeignet in anderen Bereichen des Innenraums der Fahrgastzelle angeordnet zu werden.

### Bezugszeichen

- 1: Heizvorrichtung
- 2: Reflektorgehäuse
- 3: Heizband
- 4: Heizelementträger
- 5: Schutzgitter
- 6: Trägerelement

- 10: Fahrzeug
- 11: Fußraum des Fahrzeugs 10
- 12: Fahrzeuginsasse, Fahrer

## Patentansprüche

1. Heizvorrichtung (1) für den Fahrzeuginnenraum (11) eines Fahrzeugs (10), wobei die Heizvorrichtung (1) als IR-Strahler in einem Reflektorgehäuse (2) angeordnet ist,
**dadurch gekennzeichnet, dass** der IR-Strahler mit einem in dem Reflektorgehäuse (2) angeordneten textilbasierten Heizband (3) ausgebildet ist, und
- das textilbasierte Heizband (3) aus einem Basalt-Edelstahl-Mischgarn hergestellt ist.

2. Heizvorrichtung (1) nach Anspruch 2,
**dadurch gekennzeichnet, dass** das Basalt-Edelstahl-Mischgarn aus einem Basaltmultifilament mit einer Feinheit zwischen 50 und 100 tex, vorzugsweise von 68 tex und einer Edelstahlfaser mit einem Durchmesser von 0,02 mm bis 0,05 mm, vorzugsweise von 0,035 mm hergestellt wird.

3. Heizvorrichtung (1) nach Anspruch 1 oder 2,
**dadurch gekennzeichnet, dass** das textile Heizband (3) auf einem Heizelementträger (4) angeordnet ist, welcher von dem Reflektorgehäuse (2) mit parabolischem Querschnitt aufgenommen ist.

4. Heizvorrichtung (1) nach Anspruch 3,
**dadurch gekennzeichnet, dass** das Reflektorgehäuse (2) mittels eines Schutzgitters (5) abgedeckt ist.

5. Fahrzeug (10) mit einem Fußraum (11), in welchem eine Heizvorrichtung (1) nach einem der vorhergehenden Ansprüche angeordnet ist.

## Claims

1. Heating device (1) for the vehicle interior (11) of a motor vehicle (10), wherein the heating device (1) is arranged as an IR radiator in a reflector housing (2),
**characterised in that** the IR radiator is formed with a textile-based heating strip (3) arranged in the reflector housing (2) and
- the textile-based heating strip (3) is produced from a basalt/stainless steel mixed yarn.

2. Heating device (1) according to claim 2,
**characterised in that** the basalt/stainless steel mixed yarn is produced from a basalt multifilament with a fineness of between 50 and 100 tex, preferably of 68 tex and a stainless steel fibre with a diameter of 0.02 mm to 0.05 mm, preferably of 0.035 mm.

3. Heating device (1) according to claim 1 or 2,
**characterised in that** the textile heating strip (3) is arranged on a heating element carrier (4) which is received by the reflector housing (2) with parabolic cross-section.

4. Heating device (1) according to claim 3,
**characterised in that** the reflector housing (2) is covered by means of a protective grid (5).

5. Vehicle (10) with a foot space (11) in which a heating device (1) according to any one of the preceding claims is arranged.

## Revendications

1. Dispositif de chauffage (1) pour l'habitacle de véhicule (11) d'un véhicule (10), dans lequel le dispositif de chauffage (1) est disposé en tant qu'émetteur d'infrarouges dans un châssis réflecteur (2),
**caractérisé en ce que** l'émetteur d'infrarouges est réalisé avec une bande chauffante (3) à base de textile disposée dans le châssis réflecteur (2), et
- la bande chauffante (3) à base de textile est fabriquée en un fil mélangé d'acier spécial et de basalte.

2. Dispositif de chauffage (1) selon la revendication 2,
**caractérisé en ce que** le fil mélangé d'acier spécial et de basalte est fabriqué en un multifilament de basalte avec une finesse entre 50 et 100 tex, de préférence de 68 tex et une fibre d'acier spécial avec un diamètre de 0,02 mm à 0,05 mm, de préférence de 0,035 mm.

3. Dispositif de chauffage (1) selon la revendication 1 ou 2,
**caractérisé en ce que** la bande chauffante textile (3) est disposée sur un support d'élément chauffant (4) qui est reçu par le châssis réflecteur (2) avec une section transversale parabolique.

4. Dispositif de chauffage (1) selon la revendication 3,
**caractérisé en ce que** le châssis réflecteur (2) est recouvert au moyen d'une grille de protection (5).

5. Véhicule (10) avec un espace réservé aux pieds (11), dans lequel un dispositif de chauffage (1) selon l'une quelconque des revendications précédentes est disposé.
